# EUROPÄISCHE PATENTANMELDUNG

(11) **EP 1 903 017 A1**
(43) Veröffentlichungstag der Anmeldung: **26.03.2008**
(21) Anmeldenummer: 06717228.8
(22) Anmeldetag: 17.03.2006
(51) Int. Cl.: C04B 38/00

(54) **ZELLBETON**

(30) Priorität: 13.05.2005 UA 2005004447 U
(71) Anmelder: Rymar, Taras Mykolayovych, Ul. Sventsitskogo, 18-11 Lvov, 79011 (UA); Loboyko, Oleksiy Petrovych, Ul. I Franko 13a, Morshin Lvovskaya obl. 82482 (UA)
(72) Erfinder: YAKIMECHKO, Yaroslav Bogdanovych, Lvov, 79026 (UA)
(74) Vertreter: Jeck, Anton
(86) Internationale Anmeldenummer: PCT/UA2006/000012
(87) Internationale Veröffentlichungsnummer: WO 2006/121419

(57) **Zusammenfassung**

Die Erfindung betrifft Porenbeton, der ein Bindemittel, einen Füllstoff, Porenbildner, Zusätze und Wasser enthält. Der Porenbeton weist als Füllstoff glasartige, kugelförmige Mikropartikel, nämlich Mikrokügelchen, mit folgenden Verhältnissen der Komponenten auf, wobei die Massen in % angegeben sind:

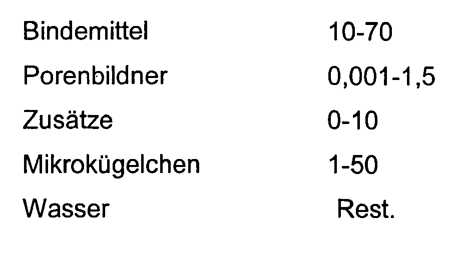

## Beschreibung

Die Erfindung bezieht sich auf das Gebiet der Baustoffe. Sie kann bei der Fertigung von Porenbetonen (bzw. Blasen- oder Zellenbeton) verwendet werden. Diese Betonarten werden als wärme- und schalldämmendes Material sowie als Konstruktionsmaterial verwendet.

Allgemein bekannt ist ein Verfahren zur Herstellung von Porenbetonen gemäß dem Russischen Industriestandard GOST 25485-89 "Porenbetone". Die Konstruktions-und Wärmedämmbetone sowie Konstruktionsbetone, die gemäß dieser Norm hergestellt werden, enthalten außer Luftporen eine Zementgrundlage. Die Zementgrundlage besteht aus einem kontinuierlichen Beton-, Silikat- oder Schlacken-Alkali-Gemisch. Infolgedessen ist die Wärmedämmung dieser Betone wesentlich niedriger als die Wärmedämmung der traditionellen Wärmedämmungsstoffe (Mineralwolle, aufgeblähte Kunststoffe).

Bekannt ist der Inhalt des leichten Betons. Er wird aus Zement und hohlen Mikrokügelchen gefertigt (Patent RU 2 154 619 S1, "Leichter Beton", S04W38/08, 20.08.2000). Zwischen den in der Mitte vorhandenen Mikrokügelchen sind Luftporen vorhanden, aber der Mangel an zusätzlichen, außer der in der Mitte vorhandenen Luftporen in den Erzeugnissen, die aus diesem Beton hergestellt werden, wirkt negativ auf die wärme- und schalldämmenden Eigenschaften.

Bekannt ist der Inhalt des leichten Betons, der auf der Zementgrundlage mit hohlen Mikrokügelchen hergestellt wird (Patent RU 2 154 619 S1, "Leichter Beton", S04W38/08, 20.08.2000). In Erzeugnissen aus diesem Betontyp fehlen die Luftporen, außer der innerhalb der Mikrokügelchen vorhandenen Luftporen. Das wirkt negativ auf die wärme- und schalldämmende Eigenschaften ein.

Das bekannte Rohstoffgemisch zur Herstellung von porösen Betonmaterialien (Erfinderzertifikat SU 1 682 353, "Rohstoffgemisch zur Herstellung von leichtem Beton", S04W38/08, Blatt Nr. 37, 07.10.1991), das Portlandzement, Blähtonsand und Kies, Asche für die Wasserentfernung, Zusatzstoff für die Luftaufnahme und Wasser enthält, kommt dem Porenbeton gemäß der Erfindung am nächsten. Die wärmedämmenden Eigenschaften dieses Betons werden durch das Vorhandensein von Luftporen bestimmt. Die Luftporen werden nach der Vergasung (Befüllung mit Schaum, Aufblähung) des Betongemisches gebildet. Die Eigenschaften dieses bekannten Porenbetons sind relativ gut für Betone, aber schlechter als die Eigenschaften der Isolierstoffe der Typen der Faser- oder Aufblähkunststoffe. Das hängt damit zusammen, dass die Wände zwischen den Luftporen in diesem Beton den Wärmestrom gut leiten. Die Wände bestehen aus einfachem Beton. Die Aufgabe, durch die Zugabe eines neuen Füllstoffs, den Mikrokügelchen, bei der Herstellung der porösen Betonstoffe ein technisches Ergebnis in Form der zusätzlichen Porenbildung durch die Mikroporenbildung in der Grundlage (Wände zwischen Luftporen) sicherzustellen, liegt dieser Erfindung zugrunde. Dadurch werden neue Gebrauchseigenschaften des Materials erreicht. Die neuen Gebrauchseigenschaften sind mit dem technischen Ergebnis verbunden, nämlich die wärmetechnischen Eigenschaften der wärmedämmenden Erzeugnisse aus Porenbeton, die den entsprechenden Werten der Mineralwolle und Aufblähpolymere nahe kommen, ferner wesentlich verbesserte, wärmetechnische und textilphysikalische Werte der Konstruktionsstoffe und Wärmedämm-und Konstruktionserzeugnisse aus Porenbeton.

Die gestellte Aufgabe wird folgendermaßen gelöst. Der Porenbeton enthält einen Bindestoff, Füllstoff, Porenbildner, Zusätze und Wasser. Er hat als Füllstoff kugelförmige, glasartige Mikropartikel, die Mikrokügelchen. Die Verhältnisse der Komponenten sind unten in % angeführt:

| | |
|---|---|
| Bindemittel | 10-70 |
| Porenbildner | 0,001-1,5 |
| Zusätze | 0-10 |
| Mikrokügelchen | 1-50 |
| Wasser | Rest. |

Dabei enthält der Beton als Bindemittel Portlandzement, ungelöschten Weißkalk oder gemahlene Hochofenkornschlacken. Außerdem enthält der Beton als Porenbildner Gasbildner, beispielsweise Silberbronze, oder Schaumbildner. Der Beton enthält als Schaumbildner ein Gemisch mit einer Grundlage aus Knochen- oder Hautleim, Kieferharz, technischem Ätznatron oder Reinigungspaste. Er enthält auch als Zusatz Regler zur Strukturbildung und/oder zur Erhöhung der plastischen Festigkeit und/oder Erstarrungsbeschleuniger und/oder Erstarrungsverzögerer und/oder Weichmacher und/oder Wasseraufnahmezusätze. Und abschließend enthält der Beton als Mikrokügelchen leichte Aschebruchstücke aus Wärmekraftwerken, den Cenokügelchen.

Die oben genannten, neuen Merkmale (Füllstoff-Mikrokügelchen, Varianten der Kombination der Komponenten und deren Verhältnisse) stellen die neuen technischen Eigenschaften der Erfindung und das technische Ergebnis bei der Zusammenwirkung mit den bekannten Merkmalen (Betoninhalt: Bindemittel, Füllstoff, Porenbildner, Zusatzstoffe, Wasser) sicher. Das technische Ergebnis der Erfindung ist eine zusätzliche Porenbildung in den Wänden zwischen den Luftporen.

Dabei können wärmedämmende Porenbetone, die mit Hilfe der Mikrokügelchen hergestellt wurden, für die Fertigung von wärmedämmenden Platten verwendet werden. Die wärmedämmenden Platten besitzen eine größere Festigkeit im Vergleich zu den anderen wärmedämmenden Plattenstoffen (Platten aus Mineralfasern, Platten aus Schaumstoffen oder Polyurethan). Die Anwendung der Mikrokügelchen bei der Herstellung der Wärmedämm- und Konstruktionserzeugnisse und Konstruktionserzeugnisse aus Porenbeton ermöglicht es, deren Festigkeit zu erhöhen, wenn die Dichte gleich bleibt. So werden die festen Erzeugnisse mit einer Minderdichte hergestellt, was im Endeffekt zur Verbesserung der wärmetechnischen Eigenschaften des Erzeugnisses führt.

Mikrokügelchen sind Komponenten von Asche- und Schlackengemischen. Das sind leichte, aus Kraftwerken stammende Aschebruchstücke, die auch Cenokügelchen genannt werden. Die Cenokügelchen sind Abfälle der Produktion der Wärmekraftwerke und werden mit Hilfe des Verfahrens der reagenslosen Flotation der Asche-und Schlackengemische der Wärmekraftwerke oder mit Hilfe eines anderen Verfahrens gewonnen. Die Cenokügelchen stellen ein feindisperses, gleitfähiges Material dar, das meistens eine graue oder weiße Farbe aufweist. Die Mikrokügelchen sind kornförmig mit einer sphärischen, glatten oder rauhen Oberfläche und weisen folgende Eigenschaften auf:

| | |
|---|---|
| Dichte der Schale | 2000-2500 kg/m³, |
| Schüttdichte | 320-450 kg/m³, |
| Durchmesser | 20-1000 µm, |
| Stärke der Schale | 5-5 µm, |
| Wärmeleitfähigkeit | 0,07-0,11 W/(mK), |
| Mohs-Skala | 5-6. |

### Beispiel

Um den angemeldeten Betoninhalt experimentell zu prüfen, wurden Standardprobenwürfel mit unterschiedlichen Verhältnissen der oben genannten Komponenten hergestellt.

Die Proben wurden folgendermaßen hergestellt. Die Komponenten (Zement, Mikrokügelchen, Wasser) wurden zunächst im Verhältnis 65:5:30 % für einen Standardwürfel mit einer Größe von 10x10x10 cm im trockenen Zustand gemischt. Die Mischzeit betrug 5 Minuten. Dann wurden die Zusatzmittel und Gasbildner zugegeben und innerhalb von 3 Minuten gemischt. Dann wurde das Gemisch in der Form für 60 Minuten stehen gelassen. Die Lagerungszeit in der Form betrug 2-20 Stunden. Nach den durchgeführten Untersuchungen mittels der Standardprobenwürfel wurde festgestellt, dass durch die Anwendung der glasartigen, hohlen Teilchen, die unter dem Namen Mikrokügelchen (Cenokügelchen) bekannt sind, als Füllstoff statt Sand bei der Herstellung der Porenbetone einmalige Eigenschaften des thermischen Widerstands des Porenbetons erreicht werden. Diese Eigenschaften sind mit den Eigenschaften der organischen Stoffe nach der Wärmeleitfähigkeit λ = 0,04-0,2 W/(m °C) (Wärmeleitfähigkeit des Normalporenbetons λ = 0,08-0,22 W/(m·°C)) vergleichbar. Es wurde auch die Erhöhung der Festigkeit des Porenbetons unter Aufrechterhaltung der Dichte und dementsprechend der wärmetechnischen Eigenschaften nachgewiesen.

Die Erzeugnisse aus Porenbeton mit dem Inhalt gemäß dieser Erfindung können mit der Anwendung einer Wärme- und Feuchtigkeitsbearbeitung (Dampferhärtung, Autoklavenbehandlung) als auch ohne diese hergestellt werden. Abhängig vom Verwendungszweck des Porenbetons (Wärmedämmbeton, Konstruktions- und Wärmedämmbeton, Konstruktionsbeton) wird das Verhältnis der Inhaltstoffe des Gemisches verändert.

Das technische Ergebnis und Gebrauchseigenschaften der Erfindung bei der Anwendung werden durch die kleinen, hohlen Mikrokügelchen, die ein gutes wärmedämmendes Material darstellen, und durch die Anordnung der Mikrokügelchen im Gemisch erreicht: abhängig von der Art des Porenbetons bzw. von der Stärke der Wand zwischen den Luftporen befinden sich die Mikropartikel entweder in der dichten Matrize der Wand der Luftporen des Betons, oder sie gelangen in die Luftporen und vergrößern damit die Fläche der inneren Oberfläche der Luftporen, die ihrerseits effektiver den Wärmestrom auffangen.

Die ausgezeichneten wärme- und schalldämmenden Eigenschaften des Porenbetons gemäß dieser Erfindung sind den Eigenschaften von Plattenisolierstoffen ähnlich. Dabei stellt der Porenbeton im Unterschied zum größten Teil der traditionellen Isolierstoffe Folgendes sicher:
- die Möglichkeit, "atmende" Einschichtwände zu gestalten (gute Dampfleitfähigkeit),
- eine Verringerung der Baukosten durch die Verminderung der Wandstärke bis zur für die Konstruktionstragfähigkeit notwendigen Stärke und durch die Entlastung des Fundaments,
- eine Verringerung der Baukosten durch das Fehlen von komplizierten, technologischen Arbeiten, um die zusätzliche Wärmedämmung zu gestalten, und durch die Verkürzung der Bauzeiten,
- die Vielseitigkeit, nämlich die Möglichkeit, den Porenbeton für innere und äußere Gestaltung, für die Wärme- und Schalldämmung von Böden und Zwischendecken zu verwenden,
- die Fertigungsfreundlichkeit, wobei eine hohe Festigkeit im Vergleich zu den vorhandenen, wärmedämmenden Stoffen (Faser-, Aufblähkunststoffe) erreicht wird.

## Patentansprüche

1. Porenbeton, der ein Bindemittel, einen Füllstoff, Porenbildner, Zusätze und Wasser enthält,
**dadurch gekennzeichnet,**
**dass** er als Füllstoff glasartige, kugelförmige Mikropartikel, nämlich Mikrokügelchen, mit folgenden Verhältnissen der Komponenten aufweist, wobei die Massen in % angegeben sind:
| | |
|---|---|
| Bindemittel | 10-70 |
| Porenbildner | 0,001-1,5 |
| Zusätze | 0-10 |
| Mikrokügelchen | 1-50 |
| Wasser | Rest. |

2. Beton nach Anspruch 1,
**dadurch gekennzeichnet,**
**dass** er als Bindemittel Portlandzement, ungelöschten Weißkalk oder gemahlene Hochofenkornschlacken enthält.

3. Beton nach Anspruch 1,
**dadurch gekennzeichnet,**
**dass** er als Porenbildner Gasbildner, vorzugsweise Silberbronze, oder Schaumbildner enthält.

4. Beton nach Anspruch 3,
**dadurch gekennzeichnet,**
**dass** er als Schaumbildner ein Gemisch mit einer Grundlage aus Knochen- oder Hautleim, aus Kieferharz, technischem Ätznatron oder Reinigungspaste enthält.

5. Beton nach Anspruch 1,
**dadurch gekennzeichnet,**
**dass** er als Zusatzstoff Regler zur Strukturbildung und/oder zur Erhöhung der plastischen Festigkeit und/oder Erstarrungsbeschleuniger und/oder Erstarrungsverzögerer und/oder Weichmacher und/oder Wasseraufnahmezusätze enthält.

6. Beton nach Anspruch 1,
**dadurch gekennzeichnet,**
**dass** er als Mikrokügelchen leichte Aschebruchstücke, nämlich Cenokügelchen, aus Wärmekraftwerken enthält.
